# EUROPEAN PATENT SPECIFICATION

(11) **EP 3 530 692 B1**
(45) Date of publication and mention of the grant of the patent: **09.12.2026**
(21) Application number: 17861400.4
(22) Date of filing: 20.10.2017
(51) Int. Cl.: C08L 67/02, C08K 3/26, C08L 23/06

(54) **POLYESTER COMPOSITION AND PREPARATION METHOD THEREFOR**
POLYESTERZUSAMMENSETZUNG UND HERSTELLUNGSVERFAHREN DAFÜR
COMPOSITION DE POLYESTER ET PROCÉDÉ DE PRÉPARATION ASSOCIÉ

(30) Priority: 21.10.2016 CN 201610922017
(43) Date of publication of application: 28.08.2019
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: ZHENG, Cui, Beijing 100013 (CN); ZHU, Guixiang, Beijing 100013 (CN); LIU, Lizhi, Beijing 100013 (CN); ZHANG, Wei, Beijing 100013 (CN)
(74) Representative: Hoffmann Eitle
(86) International application number: PCT/CN2017/107108
(87) International publication number: WO 2018/072747

(56) References cited:
- CN-A- 1 807 485
- CN-A- 102 485 766
- CN-A- 103 571 105
- CN-A- 103 627 153
- DE-A1- 2 707 852
- US-A- 5 115 004
- US-A1- 2014 316 037
- US-A1- 2015 299 406
- U WITT ET AL: "Biodegradation of aliphatic-aromatic copolyesters: evaluation of the final biodegradability and ecotoxicological impact of degradation intermediates", CHEMOSPHERE., vol. 44, no. 2, 1 July 2001 (2001-07-01), GB, pages 289 - 299, XP055665737, ISSN: 0045-6535, DOI: 10.1016/S0045-6535(00)00162-4

## Description

### Technical Field

The present invention relates to the field of polymer, specifically to a polyester composition and a process for the preparation of the polyester composition, as well as a toughened composite material prepared from the polyester composition.

### Background Art

Polybutylene terephthalate (PBT) is one of the five major engineering plastics. It was first synthesized by German scientist P. Schlack in 1942 and then industrially developed by the US company Celanese (now Ticona) and marketed under the trade name Celanex. PBT has the characteristics of good dimensional stability, high-temperature resistance, excellent flame retardant and insulation properties, good fluidity, small linear thermal expansion coefficient, good chemical solvent resistance, etc. It has a wide range of applications in the fields of electrical and electronic industry, automotive industry and office machinery. However, PBT is very poor in terms of impact resistance, especially very sensitive to defects. A tiny notch on the surface of an article may cause the whole article to be fractured. Therefore, it is quite necessary to modify PBT by toughening.

The toughening modification of PBT is mainly modification by blending, which in turn is mainly divided into three categories. The first category is toughening with fibers, wherein mainly glass fibers are added to PBT, and other fibers such as carbon fibers, bamboo fibers or flax fibers may also be added. For example, in CN105086387A, glass fibers are added to the PBT in about half of the amount thereof, which can significantly increase the notched impact strength thereof. The main disadvantage of adding fibers is that the material can no longer be processed using a conventional injection molding process, but often additional matching process cost is required, especially for long fibers that significantly improve the properties, the process cost is significant. The second category is addition of high impact materials. Due to the relatively high processing temperature of PBT, it is often necessary to add materials that can withstand relatively high processing temperatures. A very common example is addition of PC (polycarbonate). For example, in CN104693759A, after about 100% to 200% of PC based on the amount of PBT is added to PBT, the toughness is improved. The disadvantage of adding high impact materials is that almost all the current high impact materials are incompatible with PBT, they repel each other at the molecular level, and they are difficult to be completely mixed uniformly even after very strong blending conditions. Adding a large amount of a compatibilizer can partially solve this problem, but at the same time it will bring about a decline in material properties. The third category is the addition of other materials that are very similar to the PBT molecular structure but tougher than PBT to slightly improve the toughness of PBT. A typical example is PET (polyethylene terephthalate). For example, in CN104419125A, PBT and PET are blended in about equal amounts, the material obtained has stronger toughness than PBT. The disadvantage of this category is that even if the material similar to PBT in molecular structure has a better toughness than PBT, it is not better by a large margin, and the final result is that the toughness of the obtained composite material is not significantly improved.

Another effective method for the toughening modification of PBT by blending is to modify PBT by blending using a copolymer containing a group similar to the PBT in structure. However, although there are many copolymers containing PBT structure at present, due to various reasons, such as material properties and cost control, there is yet no modified material obtained by blending PBT and corresponding copolymer on the market. Therefore, at present, there is an urgent need to find a PBT product modified in terms of toughness.

US 2015/0299406 A1 describes a biaxially stretched polyester film made of a polyester resin composition (A) containing not less than 60 mass% of PBT. According to Example 6 PBT is used in an amount of 90%, and Ecoflex^{®} is contained in an amount of 10%. Ecoflex^{®} contains 55.6 mol% of adipic acid/butanediol ester and 44.4 mol% of terephthalic acid/butanediol ester.

### Disclosure

### Summary of the Invention

It is an object of the present invention to provide a polyester composition and a process for its preparation, as well as a toughened composite material prepared from the polyester composition, so as to overcome the above defects of the existing PBT products. Compared with PBT, the toughness of the polyester composition and the composite material of the present invention should be significantly improved without substantial loss of strength.

Another object of the invention is to improve the compatibility of PBT with other components in the polyester composition so that it is unnecessary to additionally add a compatibilizer.

Another object of the present invention is to provide a polyester composition which shall be processable using the same equipment as that for PBT, without the need for additional modifications to the processing equipment during its preparation.

According to the present invention, the above objects are achieved by a polyester composition comprising PBT and a specific aliphatic-aromatic copolyester.

Thus, the present invention provides a polyester composition comprising
(1) from 80 to 90% by weight, of polybutylene terephthalate; and
(2) from 10 to 20% by weight, of an aliphatic-aromatic copolyester, wherein the aliphatic-aromatic copolyester is a copolymer comprising a repeating unit A represented by formula (I) and a repeating unit B represented by formula (II), 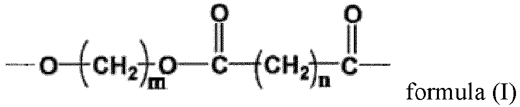 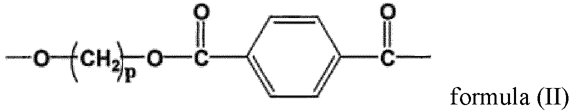
   wherein based on the total moles of the repeating unit A and the repeating unit B in the aliphatic-aromatic copolyester, the content of the repeating unit A is from 20 to 40 mol%, and the content of the repeating unit B is from 60 to 80 mol%; m is an integer of 2 to 6, n is 2, p is an integer of 2 to 4; and m, n and p are the same or different;
   wherein the % by weight is calculated based on the total weight of the polybutylene terephthalate and the aliphatic-aromatic copolyester.

The aliphatic-aromatic copolyester has a weight average molecular weight of 100,000 to 500,000, as determined by GPC; preferably, the molecular weight distribution is from 1.2 to 3, as determined by GPC.

Preferably, the polybutylene terephthalate has a weight average molecular weight of 100,000 to 200,000, as determined by GPC.

The polyester composition may further comprise a nucleating agent; the content of the nucleating agent is from 0.01 to 10% by weight, preferably from 0.2 to 5% by weight, based on the total weight of the polyester composition.

The nucleating agent may be one or more selected from the group consisting of talc, calcium oxide, carbon black, calcium carbonate, inorganic pigments, kaolin, metal carboxylates, metal phosphates, dibenzyl sorbitol and derivatives thereof, polyvinylcyclohexane, polyvinylcyclopentane, low density polyethylene, hyperbranched polyamide and ethylene-methacrylic acid ionomer; preferably one or more selected from the group consisting of calcium carbonate, low density polyethylene, dibenzyl sorbitol and derivatives thereof and hyperbranched polyamide.

The polyester composition may further comprise other additives such as erucylamide and/or white oil.

Further, the aliphatic-aromatic copolyester may be at least one selected from the group consisting of a random copolymer, an alternating copolymer, a block copolymer, and a graft copolymer.

Advantageously, the polyester composition according to the present invention may have an elongation at break of up to 230% or above, as measured by the method according to the standard GB/T 1040.2-2006.

The present invention also provides a process for the preparation of a polyester composition according to the present invention, which comprises: mixing polybutylene terephthalate and an aliphatic-aromatic copolyester and subjecting the resulting mixture to extrusion pelletization to obtain a polyester composition.

The mixing may be carried out under stirring; and the stirring rate may be from 6 to 60 rpm, and the stirring time may be from 2 to 30 min.

Advantageously, said extrusion pelletization is carried out in a twin-screw extruder; preferably, said extrusion pelletization conditions include: a temperature of 230 to 300 °C, a screw rotational speed of 10 to 70 rpm, and a torque of 2 to 80 N *m.

Preferably, no compatibilizer is added during the mixing process.

In another aspect, the present invention further provides a toughened composite material prepared from the polyester composition, which toughened composite material may have an elongation at break of up to 230% or above, as measured by the method according to the standard GB/T 1040.2-2006.

The present invention achieves the object of toughening modification of **PBT** by blending **PBT** with an aliphatic-aromatic copolyester. Compared with PBT, the polyester composition provided by the present invention has significantly improved toughness without significant loss of strength; at the same time, in the preparation of the polyester composition, since PBT and the aliphatic-aromatic copolymer used in the present invention have good compatibility, it is unnecessary to additionally add a compatibilizer. In addition, the polyester composition provided by the present invention can be processed using the same equipment as that for PBT, without the need for additional modifications to the processing equipment during its preparation. Therefore, the polyester composition provided by the present invention has good industrial application prospects.

Other characters and advantages of the present invention will be described in detail under Detailed Description of the Invention below.

### Detailed Description of the Invention

The present invention provides a polyester composition comprising polybutylene terephthalate and an aliphatic-aromatic copolyester, wherein the content of the polybutylene terephthalate is from 80 to 90% by weight, and the content of the aliphatic-aromatic copolyester is from 10 to 20% by weight.

The aliphatic-aromatic copolyester is a copolymer comprising a repeating unit A represented by formula (I) and a repeating unit B represented by formula (II), 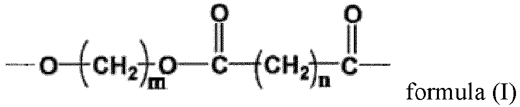 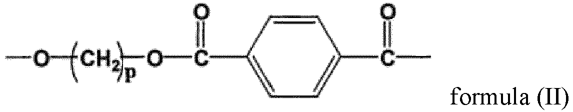 wherein based on the total moles of the repeating unit A and the repeating unit B in the aliphatic-aromatic copolyester, the content of the repeating unit A is from 20 to 40 mol%; the content of the repeating unit B is from 60 to 80 wt.%; m is an integer of 2 to 6, n is 2 , p is an integer of 2 to 4; and m, n and p are the same or different, the aliphatic-aromatic copolyester may have a weight average molecular weight of 100,000 to 500,000.

In the present invention, the weight average molecular weight of the polymer is determined by gel permeation chromatography (GPC).

In the present invention, the aliphatic-aromatic copolyester may be at least one selected from the group consisting of a random copolymer, an alternating copolymer, a block copolymer and a graft copolymer, preferably, a random copolymer and/or a block copolymer. The source of the aliphatic-aromatic copolyester in the present invention is not particularly limited, and it can be obtained by a conventional means in the art, for example, obtained commercially, or prepared by the process disclosed in CN100429256C.

Specifically, the process for preparing the aliphatic-aromatic copolyester may comprise the following steps:
(1) reacting monomer A with monomer B in the presence of a first catalyst in an inert atmosphere;
(2) reacting monomer C with monomer D in the presence of the first catalyst in an inert atmosphere;
(3) reacting the reaction product obtained in step (1) with the reaction product obtained in step (2) in the presence of a second catalyst;
wherein the monomer A is butanediol; the monomer B is terephthalic acid and/or an ester thereof, preferably, at least one selected from the group consisting of terephthalic acid, dimethyl terephthalate and diethyl terephthalate; the monomer C is a C2-C4 diol (particularly a saturated linear diol); the monomer D is a C4-C6 dibasic acid (particularly a saturated linear dibasic acid); the first catalyst is at least one selected from the group consisting of tetrabutyl titanate, titanium dioxide, diethoxy titanium and zinc acetate, preferably tetrabutyl titanate; the second catalyst is at least one selected from the group consisting of lanthanum acetylacetonate, lanthanum trichloride, triphenoxy lanthanum and lanthanum propionate, preferably lanthanum acetylacetonate.

In the present invention, in step (1), the molar ratio of the monomer B to the first catalyst is 1 : 0.0001-0.02 : 0.0001-0.02, more preferably 1 : 0.001-0.003 : 0.001-0.003.

In the present invention, in step (2), the molar ratio of the monomer D to the first catalyst is 1 : 0.0001-0.02 : 0.0001-0.02, more preferably 1 : 0.001-0.003 : 0.001-0.003.

Preferably, the molar ratio of the total amount of the first catalyst (the sum of the amount of the first catalyst in step (1) and the amount of the first catalyst in step (2)) to the amount of the second catalyst is 1 : 0.5-1.5, preferably 1 : 0.8-1.2.

In the present invention, the kinds of the various reactive monomers can be adjusted correspondingly according to the composition and molecular weight of the target product, and the molecular weight of the product and the content of each repeating unit in the product are controlled by adjusting the feeding amount and the feeding ratio, respectively.

In the present invention, in step (1), the reaction temperature is preferably 160 to 220 °C; in the present invention, in step (2), the reaction temperature is preferably 160 to 220 °C; in the present invention, in step (3), the reaction temperature is preferably 180 to 240°C.

In a preferred embodiment of the present invention, when m1 is 4, the process for preparing the aliphatic-aromatic copolyester comprises the following steps:
(S1) reacting butanediol with monomer A' in the presence of a first catalyst in an inert atmosphere;
(S2) reacting the reaction product obtained in step (S1) with monomer B' in the presence of a second catalyst;
wherein A' is terephthalic acid and/or an ester thereof, preferably at least one selected from the group consisting of terephthalic acid, dimethyl terephthalate and diethyl terephthalate; the monomer B' is a C4-C6 dibasic acid (particularly a saturated linear dibasic acid); the first catalyst and the second catalyst are described as above and will not be further described herein.

In the present invention, in step (S1), the molar ratio of the monomer A' to the first catalyst is 1 : 0.0001-0.02 : 0.0001-0.02, more preferably 1 : 0.001-0.003 : 0.001-0.003.

Preferably, the molar ratio of the first catalyst to the second catalyst is 1 : 0.5-1.5, preferably 1 : 0.8-1.2.

In the present invention, the kinds of the various reactive monomers can be adjusted correspondingly according to the composition and molecular weight of the target product, and the molecular weight of the product and the content of each repeating unit in the product are controlled by adjusting the feeding amount and the feeding ratio, respectively.

In the present invention, in step (S1), the reaction temperature is preferably 160 to 220°C; in the present invention, in step (S2), the reaction temperature is preferably 180 to 240°C.

More specifically, the process for producing the aliphatic-aromatic copolyester may comprise the following steps: adding 1,4-butanediol, dimethyl benzoate and the catalyst as described in US11312373 to a reactor, heating and stirring under a nitrogen atmosphere until a clear solution is obtained; subsequently, increasing the temperature to 160 to 220 °C for reaction; adding succinic acid after most of the distilled methanol in the system is removed, and increasing the temperature to 180 to 240°C; removing most of the water by distillation, then slowly creating a vacuum environment, and increasing the temperature of the system to 220 to 280°C; after 3 to 6 hours, completing the reaction to obtain a product.

In the present invention, the polybutylene terephthalate is not particularly limited and may be a conventional selection in the art, for example, the polybutylene terephthalate may have a weight average molecular weight of 100,000 to 200,000, and can be obtained commercially as usual, such as Crastin SC164 NC010, available commercially from the company DuPont.

According to the present invention, the polyester composition may further comprise a nucleating agent; the content of the nucleating agent is from 0.01 to 10% by weight, preferably from 0.2 to 5% by weight, more preferably from 1 to 5% by weight, based on the total weight of the polyester composition.

According to the present invention, the nucleating agent may be those as conventionally selected in the art. For example, the nucleating agent may be one or more selected from the group consisting of talc, calcium oxide, carbon black, calcium carbonate, inorganic pigments (such as the yellow or green pigments purchased from Guangzhou Yingyi Plastic Pigment Co., Ltd.), kaolin, metal carboxylates, metal phosphates, dibenzyl sorbitol and derivatives thereof, polyvinylcyclohexane, polyvinylcyclopentane, low density polyethylene, hyperbranched polyamide and ethylene-methacrylic acid ionomer; preferably one or more selected from the group consisting of calcium carbonate, low density polyethylene, dibenzyl sorbitol and derivatives thereof, and hyperbranched polyamide; more preferably, calcium carbonate and/or low density polyethylene.

**In** the present invention, the polyester composition may further comprise other additives, such as erucylamide and/or white oil.

The present invention further provides a process for the preparation of the polyester composition according to the present invention, comprising: mixing all the components including polybutylene terephthalate and the aliphatic-aromatic copolyester, and subjecting the resulting mixture to extrusion pelletization to obtain the polyester composition.

According to the present invention, the above process may further comprise carrying out the process of mixing the polybutylene terephthalate and the aliphatic-aromatic copolyester in the presence of a nucleating agent; the nucleating agent may be used in an amount of 0.01 to 10% by weight, preferably 0.2 to 5% by weight, more preferably 1 to 5% by weight, based on the total weight of the polyester composition.

The types of the nucleating agent are described as above.

In the present invention, the process may further comprise: carrying out the process of mixing PBT and the aliphatic-aromatic copolyester in the presence of a nucleating agent and other additives, wherein the other additives may be erucylamide and/or white oil.

According to the present invention, the mixing can be carried out under stirring; the stirring rate can be 6 to 60 rpm, and the stirring time can be 2 to 30 min.

According to the present invention, the extrusion pelletization process can be carried out according to a conventional extrusion pelletization method, for example, the extrusion pelletization can be carried out in a twin-screw extruder; preferably, the extrusion pelletization conditions include: a temperature of 230 to 300°C, a screw rotational speed of 10 to 70 rpm, and a torque of 2 to 80 N*m; more preferably, the twin-screw extruder includes six temperature sections, and the temperatures of various sections from the feed inlet to the extrusion outlet are successively 240°C, 250°C, 260°C, 260°C, 265°C, 260°C.

In the present invention, the inventors have unexpectedly found during the research that blending PBT with an aliphatic-aromatic copolyester can significantly improve the toughness of the product; and, the aliphatic-aromatic copolyester have good compatibility with the copolymer of PBT, the purpose of toughening modification of PBT material can be achieved under conventional blending conditions without the need of additionally adding a compatibilizer. Thus, in the present invention, the mixing process may be carried out without adding a compatibilizer.

In the present invention, the compatibilizer may be those conventionally selected in the art, and may be, for example, at least one selected from the group consisting of PE-g-ST, PP-g-ST, ABS-g-MAH, PE-g-MAH and PP-g- MAH.

The polyester composition according to the present invention may have an elongation at break of up to 230% or above, and has significantly improved toughness.

A toughened composite material can be prepared from the polyester composition of the present invention by a conventional molding process. The toughened composite material according to the present invention may have an elongation at break of up to 230% or above, measured by the method according to the standard GB/T 1040.2-2006.

### Examples

The present invention will be described in detail below by way of examples. It shall be understood that the examples described herein are merely used to explain and illustrate the present invention and are not intended to limit the present invention.

In the following examples and comparative examples,
the weight average molecular weight of a polymer was determined by gel permeation chromatography (GPC) on Waters-208 (with a Waters 2410 RI detector, 1.5 mL/min flow rate, 30°C) instrument, using tetrahydrofuran (THF) as the solvent, and calibrated with polystyrene standard;
the microstructure of PBT and the aliphatic-aromatic copolyester was determined by an AVANCE DRX 400 MHz NMR spectrometer from the company Bruker, Switzerland, using deuterated chloroform as the solvent;
the constitution of the polyester composition was determined by the feeding of the starting materials;
the mechanical properties of the polyester composition were tested by the method according to the standard GB/T 1040.2-2006, and the gauge dimension of 5B was chosen;
unless otherwise specified, the aliphatic-aromatic copolyester used in the present invention was self-made according to the process disclosed in Examples B13-B21 of CN100429256C, wherein the kinds of the starting materials for reaction can be correspondingly adjusted according to the composition and molecular weight of the target product, and the molecular weight of the product and the content of each repeating unit in the product can be controlled by adjusting the feeding amount and the feeding ratio, respectively.

### Example 1

180g of polybutylene terephthalate (available from the company DuPont, under the designation Crastin SC164 NC010, the same below), 20g of butylene terephthalate-butylene succinate copolyester (weight average molecular weight of 100,000, wherein based on the total moles of the butylene succinate repeating unit and the butylene terephthalate repeating unit, the content of the butylene terephthalate repeating unit is 80 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections in the twin-screw extruder from the feed inlet to the extrusion outlet being successively 240°C, 250°C, 260°C, 260°C, 265°C, 260°C, to prepare polyester composition A1.

### Comparative example 1

A polyester composition was prepared according to the process of Example 1, except that the butylene terephthalate-butylene succinate copolyester used in Example 1 was not added, to obtain polyester composition D1.

### Comparative example 2

A polyester composition was prepared according to the process of Example 1, except that the amount of the polybutylene terephthalate was 20g, and the amount of the butylene terephthalate-butylene succinate copolyester was 180g, to obtain polyester composition D2.

### Comparative example 3

A polyester composition was prepared according to the process of Example 1, except that the same weight of polybutylene succinate (available from the company BASF, under the designation 1111HTA4) was used instead of the butylene terephthalate-butylene succinate copolyester used in Example 1, to obtain polyester composition D3.

### Comparative example 4

A polyester composition was prepared according to the process of Example 1, except that the same weight of polyethylene terephthalate (available from the company DuPont, under the designation FR530) was used instead of the butylene terephthalate-butylene succinate copolyester used in Example 1, to obtain polyester composition D4.

### Example 2

180g of polybutylene terephthalate (available from the company DuPont, under the designation Crastin SC164 NC010), 20g of butylene terephthalate-butylene succinate copolyester (weight average molecular weight of 100,000, wherein based on the total moles of the butylene succinate repeating unit and the butylene terephthalate repeating unit, the content of the butylene terephthalate repeating unit is 60 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A2.

### Example 3

180g of polybutylene terephthalate (available from the company DuPont, under the designation Crastin SC164 NC010), 20g of ethylene terephthalate- ethylene succinate copolyester (weight average molecular weight of 100,000, wherein based on the total moles of the ethylene succinate repeating unit and the ethylene terephthalate repeating unit, the content of the ethylene terephthalate repeating unit is 80 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A3.

### Example 4

180g of polybutylene terephthalate (available from the company DuPont, under the designation Crastin SC164 NC010), 20g of butylene terephthalate-butylene adipate copolyester (weight average molecular weight of 100,000, wherein based on the total moles of the butylene adipate repeating unit and the butylene terephthalate repeating unit, the content of the butylene terephthalate repeating unit is 60 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A4.

### Example 5

160g of polybutylene terephthalate (available from the company DuPont, under the designation Crastin SC164 NC010), 40g of butylene terephthalate-butylene adipate copolyester (weight average molecular weight of 100,000, wherein based on the total moles of the butylene adipate repeating unit and the butylene terephthalate repeating unit, the content of the butylene terephthalate repeating unit is 60 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A5.

### Example 6

160g of polybutylene terephthalate (available from the company DuPont, under the designation Crastin SC164 NC010), 40g of butylene terephthalate-butylene adipate copolyester (weight average molecular weight of 100,000, wherein based on the total moles of the butylene adipate repeating unit and the butylene terephthalate repeating unit, the content of the butylene terephthalate repeating unit is 60 mol%) and 10g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A6.

### Example 7

160g of polybutylene terephthalate (available from the company DuPont, under the designation Crastin SC164 NC010), 40g of butylene terephthalate-butylene adipate copolyester (weight average molecular weight of 100,000, wherein based on the total moles of the butylene adipate repeating unit and the butylene terephthalate repeating unit, the content of the butylene terephthalate repeating unit is 60 mol%) and 2g of a low density polyethylene (available from SINOPEC Yanshan Petrochemical Company, under the designation LD607) were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A7.

### Example 8

180g of polybutylene terephthalate (available from the company DuPont, under the designation Crastin SC164 NC010), 20g of butylene terephthalate-butylene succinate copolyester (weight average molecular weight of 500,000, wherein based on the total moles of the butylene succinate repeating unit and the butylene terephthalate repeating unit, the content of the butylene terephthalate repeating unit is 80 mol%) and 2g of calcium carbonate were mixed under stirring, with the stirring rate of 10 rpm and for the time of 10 minutes. The resulting mixture was subjected to extrusion pelletization via a twin-screw extruder, with the rotational speed of the screw being controlled at 10 rpm, the screw torque being 20 N*m, and the temperatures of various sections from the feed inlet to the extrusion outlet in the twin-screw extruder being successively 240°C, 250°C, 260°C, 260°C, 265°C, 260°C, to prepare polyester composition A8.

### Example 9

A polyester composition was prepared according to the process of Example 1, except that the calcium carbonate used in Example 1 was not added, to obtain polyester composition A9.

### Test examples

The polyester compositions prepared in Examples 1-9 and Comparative examples 1-4 were made into specimens, respectively, which were subjected to mechanical property tests such as tensile yield strength (MPa) and elongation at break (%). The results are shown in Table 1 below.

**Table 1**

| | Specimen material | Tensile yield strength (MPa) | Elongation at break (%) |
|---|---|---|---|
| Test example 1 | A1 | 54 | 320 |
| Test example 2 | D1 | 58 | 8 |
| Test example 3 | D2 | 25 | 520 |
| Test example 4 | D3 | 50 | 12 |
| Test example 5 | D4 | 51 | 10 |
| Test example 6 | A2 | 53 | 370 |
| Test example 7 | A3 | 45 | 230 |
| Test example 8 | A4 | 53 | 380 |
| Test example 9 | A5 | 48 | 520 |
| Test example 10 | A6 | 50 | 450 |
| Test example 11 | A7 | 51 | 480 |
| Test example 12 | A8 | 55 | 310 |
| Test example 13 | A9 | 52 | 320 |

It can be seen from the comparison of the results of the mechanical property tests of the specimens made from the above polyester compositions, which are prepared in Examples 1 to 9 and Comparative examples 1 to 4, that the polyester compositions provided by the present invention have an elongation at break as high as 230% or above, have significantly improved toughness without substantial loss of strength. Moreover, it is unnecessary to additionally add a compatibilizer during the preparation of the polyester compositions. In addition, the polyester compositions provided by the present invention can be processed using the same equipment as that for PBT, without the need for additional modifications to the processing equipment during its preparation. Therefore, the polyester compositions provided by the invention have good industrial application prospects.

## Claims

1. A polyester composition, comprising
(1) from 80 to 90% by weight of polybutylene terephthalate; and
(2) from 10 to 20% by weight of an aliphatic-aromatic copolyester, wherein the aliphatic-aromatic copolyester is a copolymer comprising a repeating unit A represented by formula (I) and a repeating unit B represented by formula (II), 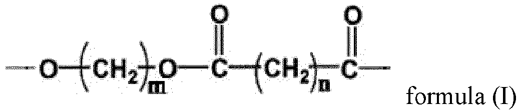 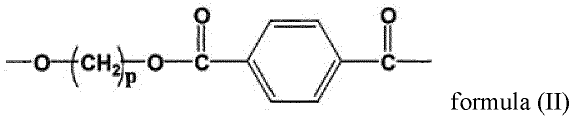
wherein based on the total moles of the repeating unit A and the repeating unit B in the aliphatic-aromatic copolyester, the content of the repeating unit A is from 20 to 40 mol%, and the content of the repeating unit B is from 60 to 80 mol%; m is an integer of 2 to 6, n is 2, p is an integer of 2 to 4; and m, n and p are the same or different;
wherein the % by weight is calculated based on the total weight of the polybutylene terephthalate and the aliphatic-aromatic copolyester;
wherein the aliphatic-aromatic copolyester has a weight average molecular weight of 100,000 to 500,000, as determined by GPC.

2. The polyester composition according to claim 1, **characterized in that** the aliphatic-aromatic copolyester has a molecular weight distribution of 1.2 to 3, as determined by GPC.

3. The polyester composition according to claim 1 or 2, **characterized in that** the polybutylene terephthalate has a weight average molecular weight of 100,000 to 200,000, as determined by GPC.

4. The polyester composition according to any one of claims 1 to 3, **characterized in that** the polyester composition further comprises a nucleating agent; the content of the nucleating agent is from 0.01 to 10% by weight, preferably from 0.2 to 5% by weight, based on the total weight of the polyester composition.

5. The polyester composition according claim 4, **characterized in that** the nucleating agent is one or more selected from the group consisting of talc, calcium oxide, carbon black, calcium carbonate, inorganic pigments, kaolin, metal carboxylates, metal phosphates, dibenzyl sorbitol and derivatives thereof, polyvinylcyclohexane, polyvinylcyclopentane, low density polyethylene, hyperbranched polyamide and ethylene-methacrylic acid ionomer; preferably one or more selected from the group consisting of calcium carbonate, low density polyethylene, dibenzyl sorbitol and derivatives thereof and hyperbranched polyamide.

6. The polyester composition according to any one of claims 1 to 5, **characterized in that** the polyester composition further comprises erucylamide and/or white oil.

7. The polyester composition according to any one of claims 1 to 6, **characterized in that** the aliphatic-aromatic copolyester is at least one selected from the group consisting of a random copolymer, an alternating copolymer, a block copolymer, and a graft copolymer.

8. The polyester composition according to any one of claims 1 to 7, **characterized in that** the polyester composition has an elongation at break of equal to or greater than 230%, as measured by the method according to the standard GB/T 1040.2-2006.

9. A process for the preparation of a polyester composition according to any one of claims 1 to 8, **characterized in that** the process comprises: mixing all the components including polybutylene terephthalate and the aliphatic-aromatic copolyester, and subjecting the resulting mixture to extrusion pelletization to obtain the polyester composition.

10. The process according to claim 9, **characterized in that** the mixing is carried out under stirring; and the stirring rate is 6 to 60 rpm, and the stirring time is 2 to 30 min;
said extrusion pelletization is carried out in a twin-screw extruder; preferably, said extrusion pelletization conditions include: a temperature of 230 to 300 °C, a screw rotational speed of 10 to 70 rpm, and a torque of 2 to 80 N *m.

11. The process according to claim 9 or 10, **characterized in that** no compatibilizer is added during the mixing process.

12. A toughened composite material, prepared from a polyester composition according to any one of claims 1 to 8.

## Patentansprüche

1. Polyesterzusammensetzung, umfassend
(1) 80 bis 90 Gew.-% Polybutylenterephthalat; und
(2) 10 bis 20 Gew.-% eines aliphatisch-aromatischen Copolyesters, wobei der aliphatisch-aromatische Copolyester ein Copolymer ist, das eine durch die Formel (I) dargestellte Wiederholungseinheit A und eine durch die Formel (II) dargestellte Wiederholungseinheit B umfasst, 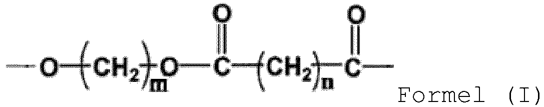 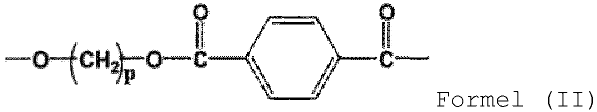
wobei, bezogen auf die Gesamtmolzahl der Wiederholungseinheit A und der Wiederholungseinheit B in dem aliphatisch-aromatischen Copolyester, der Gehalt der Wiederholungseinheit A 20 bis 40 Mol-% beträgt und der Gehalt der Wiederholungseinheit B 60 bis 80 Mol-% beträgt; m eine ganze Zahl von 2 bis 6 ist, n 2 ist, p eine ganze Zahl von 2 bis 4 ist; und m, n und p gleich oder verschieden sind;
wobei die Gew.-% bezogen auf das Gesamtgewicht des Polybutylenterephthalats und des aliphatisch-aromatischen Copolyesters berechnet sind;
wobei der aliphatisch-aromatische Copolyester ein gewichtsmittleres Molekulargewicht von 100.000 bis 500.000, bestimmt mittels GPC, aufweist.

2. Polyesterzusammensetzung gemäß Anspruch 1, **dadurch gekennzeichnet, dass** der aliphatisch-aromatische Copolyester eine Molekulargewichtsverteilung von 1,2 bis 3, bestimmt mittels GPC, aufweist.

3. Polyesterzusammensetzung gemäß Anspruch 1 oder 2, **dadurch gekennzeichnet, dass** das Polybutylenterephthalat ein gewichtsmittleres Molekulargewicht von 100.000 bis 200.000, bestimmt mittels GPC, aufweist.

4. Polyesterzusammensetzung gemäß einem der Ansprüche 1 bis 3, **dadurch gekennzeichnet, dass** die Polyesterzusammensetzung ferner ein Keimbildungsmittel umfasst; der Gehalt des Keimbildungsmittels 0,01 bis 10 Gew.-%, bevorzugt 0,2 bis 5 Gew.-%, bezogen auf das Gesamtgewicht der Polyesterzusammensetzung, beträgt.

5. Polyesterzusammensetzung gemäß Anspruch 4, **dadurch gekennzeichnet, dass** das Keimbildungsmittel eines oder mehr, ausgewählt aus der Gruppe, bestehend aus Talk, Calciumoxid, Ruß, Calciumcarbonat, anorganischen Pigmenten, Kaolin, Metallcarboxylaten, Metallphosphaten, Dibenzylsorbit und Derivaten davon, Polyvinylcyclohexan, Polyvinylcyclopentan, Polyethylen niedriger Dichte, hyperverzweigtem Polyamid und Ethylen-Methacrylsäure-Ionomer, ist; bevorzugt eines oder mehr, ausgewählt aus der Gruppe, bestehend aus Calciumcarbonat, Polyethylen niedriger Dichte, Dibenzylsorbit und Derivaten davon sowie hyperverzweigtem Polyamid, ist.

6. Polyesterzusammensetzung gemäß einem der Ansprüche 1 bis 5, **dadurch gekennzeichnet, dass** die Polyesterzusammensetzung ferner Erucylamid und/oder Weißöl umfasst.

7. Polyesterzusammensetzung gemäß einem der Ansprüche 1 bis 6, **dadurch gekennzeichnet, dass** der aliphatisch-aromatische Copolyester mindestens eines, ausgewählt aus der Gruppe, bestehend aus einem statistischen Copolymer, einem alternierenden Copolymer, einem Blockcopolymer und einem Pfropfcopolymer, ist.

8. Polyesterzusammensetzung gemäß einem der Ansprüche 1 bis 7, **dadurch gekennzeichnet, dass** die Polyesterzusammensetzung eine Bruchdehnung von gleich oder mehr als 230%, gemessen nach dem Verfahren gemäß der Norm GB/T 1040.2-2006, aufweist.

9. Verfahren zur Herstellung einer Polyesterzusammensetzung gemäß einem der Ansprüche 1 bis 8, **dadurch gekennzeichnet, dass** das Verfahren umfasst: das Mischen aller Komponenten, einschließlich des Polybutylenterephthalats und des aliphatisch-aromatischen Copolyesters, und das Extrusionspelletieren der resultierenden Mischung, um die Polyesterzusammensetzung zu erhalten.

10. Verfahren gemäß Anspruch 9, **dadurch gekennzeichnet, dass** das Mischen unter Rühren durchgeführt wird; und die Rührgeschwindigkeit 6 bis 60 U/min beträgt und die Rührzeit 2 bis 30 min beträgt;
wobei das Extrusionspelletieren in einem Doppelschneckenextruder durchgeführt wird; die Bedingungen für das Extrusionspelletieren bevorzugt beinhalten: eine Temperatur von 230 bis 300°C, eine Schneckendrehzahl von 10 bis 70 U/min und ein Drehmoment von 2 bis 80 N*m.

11. Verfahren gemäß Anspruch 9 oder 10, **dadurch gekennzeichnet, dass** während des Mischprozess kein Kompatibilisator zugegeben wird.

12. Verstärktes Verbundmaterial, hergestellt mit einer Polyesterzusammensetzung gemäß einem der Ansprüche 1 bis 8.

## Revendications

1. Composition de polyester, comprenant
(1) de 80 à 90 % en poids de polytéréphtalate de butylène ; et
(2) de 10 à 20 % en poids d'un copolyester aliphatique-aromatique, dans laquelle le copolyester aliphatique-aromatique est un copolymère comprenant un motif de répétition A représenté par la formule (I) et un motif de répétition B représenté par la formule (II), 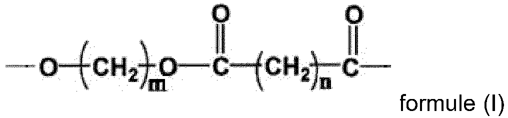 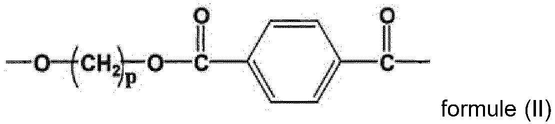
dans laquelle, sur la base du nombre total de moles du motif de répétition A et du motif de répétition B dans le copolyester aliphatique-aromatique, la teneur du motif de répétition A est de 20 à 40 % molaire, et la teneur du motif de répétition B est de 60 à 80 % molaire ; m est un nombre entier de 2 à 6, n est 2, p est un nombre entier de 2 à 4 ; et m, n et p sont identiques ou différents ;
dans laquelle le % en poids est calculé sur la base du poids total du polytéréphtalate de butylène et du copolyester aliphatique-aromatique ;
dans laquelle le copolyester aliphatique-aromatique présente une masse moléculaire moyenne en poids de 100 000 à 500 000, telle que déterminée par GPC.

2. Composition de polyester selon la revendication 1, **caractérisée en ce que** le copolyester aliphatique-aromatique présente une distribution des masses moléculaires de 1,2 à 3, telle que déterminée par GPC.

3. Composition de polyester selon la revendication 1 ou la revendication 2, **caractérisée en ce que** le polytéréphtalate de butylène présente une masse moléculaire moyenne en poids de 100 000 à 200 000, telle que déterminée par GPC.

4. Composition de polyester selon l'une quelconque des revendications 1 à 3, **caractérisée en ce que** la composition de polyester comprend en outre un agent de nucléation ; la teneur en agent de nucléation est de 0,01 à 10 % en poids, de préférence de 0,2 à 5 % en poids, sur la base du poids total de la composition de polyester.

5. Composition de polyester selon la revendication 4, **caractérisée en ce que** l'agent de nucléation est un ou plusieurs composés sélectionnés parmi le groupe constitué de talc, d'oxyde de calcium, de noir de carbone, de carbonate de calcium, de pigments inorganiques, de kaolin, de carboxylates métalliques, de phosphates métalliques, de dibenzylsorbitol et de dérivés de celui-ci, de polyvinylcyclohexane, de polyvinylcyclopentane, de polyéthylène basse densité, de polyamide hyperramifié et d'ionomère d'éthylène-acide méthacrylique ; de préférence un ou plusieurs composés sélectionnés parmi le groupe constitué de carbonate de calcium, de polyéthylène basse densité, de dibenzylsorbitol et de dérivés de celui-ci et de polyamide hyperramifié.

6. Composition de polyester selon l'une quelconque des revendications 1 à 5, **caractérisée en ce que** la composition de polyester comprend en outre de l'érucamide et/ou de l'huile blanche.

7. Composition de polyester selon l'une quelconque des revendications 1 à 6, **caractérisée en ce que** le copolyester aliphatique-aromatique est au moins un composé sélectionné parmi le groupe constitué d'un copolymère aléatoire, d'un copolymère alterné, d'un copolymère à blocs et d'un copolymère greffé.

8. Composition de polyester selon l'une quelconque des revendications 1 à 7, **caractérisée en ce que** la composition de polyester présente un allongement à la rupture qui est égal à ou supérieur à 230 %, tel que mesuré par le procédé selon la norme GB/T 1040.2-2006.

9. Procédé pour la préparation d'une composition de polyester selon l'une quelconque des revendications 1 à 8, **caractérisé en ce que** le procédé comprend : mélanger tous les composants incluant le polytéréphtalate de butylène et le copolyester aliphatique-aromatique, et soumettre le mélange résultant à une granulation par extrusion afin d'obtenir la composition de polyester.

10. Procédé selon la revendication 9, **caractérisé en ce que** le mélange est effectué sous agitation ; et la vitesse d'agitation est de 6 à 60 tr/min, et le temps d'agitation est de 2 à 30 min ;
ladite granulation par extrusion est effectuée dans une extrudeuse bivis ; de préférence, lesdites conditions de granulation par extrusion incluent : une température de 230 à 300 °C, une vitesse de rotation de la vis de 10 à 70 tr/min, et un couple de 2 à 80 N *m.

11. Procédé selon la revendication 9 ou la revendication 10, **caractérisé en ce qu'**aucun compatibilisant n'est ajouté pendant le procédé de mélange.

12. Matériau composite renforcé, préparé à partir d'une composition de polyester selon l'une quelconque des revendications 1 à 8.
